# EUROPÄISCHE PATENTSCHRIFT

(11) **EP 0 363 499 B1**
(45) Veröffentlichungstag und Bekanntmachung des Hinweises auf die Patenterteilung: **18.11.1993**
(21) Anmeldenummer: 88115727.5
(22) Anmeldetag: 23.09.1988
(51) Int. Cl.: H04L 12/64, H04Q 11/04

(54) **Verfahren und Schaltungsanordnung zum Übertragen von Sprachsignalen in einem Breitband-Kommunikationsnetz**
Method and circuit arrangement for the transmission of voice signals in a broadband communication network
Méthode et dispositif pour transmettre des signaux vocaux dans un réseau de communication à large bande

(43) Veröffentlichungstag der Anmeldung: 18.04.1990
(73) Patentinhaber: SIEMENS AKTIENGESELLSCHAFT, 80333 München (DE)
(72) Erfinder: Kammerl, Anton Dr.-Ing., D-8038 Gröbenzell (DE)

(56) Entgegenhaltungen:
- EP-A- 0 365 693
- IEEE JOURNAL ON SELECTED AREAS IN COMMUNICATIONS, Band SAC-5, Nr. 8, Oktober 1987, Seiten 1222-1230, IEEE, New York, US; D.R. SPEARS: "Broadband ISDN switching capabilities from a services perspective"
- COMPUTER NETWORKING SYMPOSIUM, 17.-18. November 1986, Washington, D.C., Seiten 141-150, IEEE, New York, US; S. NOJIMA et al.: "High speed packet switching network for multi-media information"

## Beschreibung

Die Erfindung betrifft ein Verfahren und eine Schaltungsanordnung gemäß Oberbegriff des Patentanspruches 1.

Es ist bereits ein Breitband-Kommunikationsnetz bekannt ("Der Fernmelde-Ingenieur", 41. Jahrgang, September 1987, Heft 9 (Vermittlungstechnik in Paketübermittlungssystemen), Seiten 2 bis 8), in welchem Signale unterschiedlicher Dienste nach einem sogenannten ATD (Asynchronous Time Division)-Verfahren, das heißt in Paketen, übertragen werden. U. a. ist auch eine Übertragung von Sprachsignalen im Zuge von Wählverbindungen zwischen Teilnehmereinrichtungen vorgesehen. Dabei verfügt das Breitband-Kommunikationsnetz an den Netzschnittstellen über Paketier/Depaketier-Einrichtungen für die Bildung bzw. Auflösung von Paketen.

In Breitband-Kommunikationsnetzen, in welchen Pakete fester Länge übertragen werden, treten bei der Übertragung von Sprachsignalen durch die erforderlichen Paketier/Depaketier-Zeiten sowie durch die Verarbeitungs-und Wartezeiten in Vermittlungseinrichtungen Verzögerungszeiten auf, die sich auf die Qualität von Sprachsignalübertragungen nachteilig auswirken können. So können durch zu lange Verzögerungszeiten unerwünscht große Gesprächspausen entstehen, die den Gesprächsfluß stören. Darüber hinaus können in Breitband-Kommunikationsnetzen, welchen neben Breitband-Paketvermittlungsnetzen auch analoge/digitale Fernsprech-Vermittlungsnetze zugehörig sind, an die Teilnehmereinrichtungen über Gabelanordnungen angeschlossen sind, bei einem Übergang zwischen diesen Netzen zusätzliche Probleme auftreten. Diese bestehen darin, daß durch die gerade genannten Verzögerungszeiten in den Paketvermittlungsnetzen die Laufzeit von Echosignalen, die durch die Gabelanordnungen hervorgerufen werden, eine solche Größenordnung annehmen, daß die Echosignale von den Fernsprechteilnehmern als störend empfunden werden.

Die genannten Echosignale können nun zwar durch in die Übertragungsleitungen geschaltete Echosperren bzw. Echokompensatoren unterdrückt werden. Damit ist jedoch ein schaltungstechnischer Aufwand erforderlich, der zuweilen unerwünscht ist. Darüber hinaus ist bereits für eine Reduzierung der Verzögerungszeiten in Breitband-Paketvermittlungsnetzen vorgeschlagen worden, die Pakete fester Länge bei Sprachsingalübertragungen nur zum Teil mit Sprachsignalen zu belegen (nicht voveröffentlichte europäische Patentanmeldung EP-A-0365 693).

Außerdem ist aus "IEEE Journal on Selected Areas in Communications", Band SAC-5, Nr. 8, Oktober 1987, Seiten 1222 bis 1230, IEEE, New York, US, D.R. Spears: " Broadband ISDN Switching Capabilities from a Services perspective" ein sogenanntes "Dynamic time devision multiplexing" (DTDM) bekannt, bei welchem ein einziger physikalischer Hochgeschwindigkeits-Kanal in eine Mehrzahl von virtuellen Kanälen unterteilt wird, welche auf einer Rufbasis dynamisch zuordenbar und größenmäßig festlegbar sind. Dabei ist unter Bezugnahme auf ein Beispiel für die Übertragungsrate des physikalischen Kanals und der Anzahl der in einem Zeitschlitz und damit der in einem Paket übertragbaren Sprachsignale ausgeführt, daß eine bestimmte, durch die Paketierung bedingte Verzögerung auftritt. Weiterhin ist ausgeführt, daß eine Verdopplung der Paketrate zu einer Halbierung der Verzögerungszeit führt. Eine solche Halbierung der Verzögerungszeit kann dabei entweder durch eine Halbierung des Informationsinhaltes jedes der Pakete oder durch Benutzung eines qualitativ höheren Algorithmus für die Sprachcodierung erreicht werden.

Es ist nun Aufgabe der vorliegenden Erfindung, einen Weg zu zeigen, wie bei einer zumindest teilweise in einem Paketvermittlungsnetz verlaufenden Übertragung von Sprachsignalen, die durch das Paketvermittlungsnetz bedingten Verzögerungszeiten reduziert werden können.

Gelöst wird die vorstehend aufgezeigte Aufgabe bei einem Verfahren und einer Anordnung gemäß den Oberbegriffen der Patentansprüche 1 und 6 durch die im kennzeichnenden Teil dieser Patentansprüche angegebenen Merkmale. Die Erfindung bringt den Vorteil mit sich, daß bei über das Paketvermittlungsnetz verlaufenden Fernsprech-Verbindungen unter der Steuerung der Netzübergangseinrichtungen zwischen dem Paketvermittlungsnetz und dem analogen/digitalen Vermittlungsnetz ohne Steuerungsaufwand in Paketvermittlungsanlagen der Paketfüllgrad für die Pakete fester Länge reduziert wird, um die zuvor genannten Verzögerungszeiten zu reduzieren, während für im Zuge von Verbindungen anderer Dienste zu übertragende Nachrichtensignale die volle Paketkapazität ausgenutzt werden kann. Durch diese Reduzierung des Paketfüllgrades kann der Einsatz der zuvor genannten Echobehandlungseinrichtungen weitgehend vermieden, zumindest jedoch deren Bedarf stark reduziert werden.

Eine lediglich geringer zusätzlicher Steuerungsaufwand in Netzübergangseinrichtungen und in den mit Teilnehmereinrichtungen verbundenen Paketier/Depaketier-Einrichtungen ist dann erforderlich, wenn von der jeweiligen Netzübergangseinrichtung das Steuersignal einerseits der jeweiligen, ihr zugehörigen Paketier/Depaketier-Einrichtung direkt zugeführt wird und andererseits für eine Übertragung zu der weiteren, an der aufzubauenden Verbindung beteiligten Paketier/Depaketier-Einrichtung in ein im Zuge des Verbindungsaufbaues zu übertragendes Signalisierungspaket eingefügt wird. Durch dieses Einfügen von Steuersignalen als Zusatzinformationen in ohnehin während des Aufbaues von Verbindungen zu übertragende Signalisierungspakete sind keine Änderungen in bestehenden Signalisierungs-Prozeduren erforderlich.

Darüber hinaus ist es zweckmäßig, daß von den Paketier/Depaketier-Einrichtungen in einer Grundeinstellung für die Übertragung von Sprachsignalen die volle Kapazität der Sprachsignal-Pakete ausgenutzt wird und daß lediglich auf das Auftreten eines Anforderungssignals in der jeweiligen Netzübergangseinrichtung hin von dieser ein Steuersignal den an der jeweils aufzubauenden Verbindung beteiligten Paketier/Depaketier-Einrichtungen für eine Reduzierung des Paketfüllgrades der Sprachsignal-Pakete zugeführt wird. Auf diese Weise kann für Verbindungen, die ausschließlich innerhalb des Paketvermittlungsnetzes verlaufen, die volle Paketkapazität für Sprachsignalübertragungen genutzt werden, während für Verbindungen mit einem Netzübergang eine Reduzierung des Paketfüllgrades vorgenommen wird.

Bei Bestehen einer Mehrzahl von Netzübergängen in verschiedenen Übertragungseinrichtungen zwischen einem Paketvermittlungsnetz und einem oder mehreren Fernsprech-Vermittlungsnetzen ist es vorteilhaft, daß von den Netzübergangseinrichtungen jeweils in Abhängigkeit von der Übertragungsrichtung individuell durch Abgabe eines entsprechenden Steuersignals der Paketfüllgrad für Sprachsignal-Pakete festgelegt wird. Dies bringt den Vorteil mit sich, daß für bestimmte den Netzübergangseinrichtungen zugeordnete Gruppen von Verbindungen individuell der günstigste Paketfüllgrad von Sprachsignal-Paketen festgelegt werden kann.

Für ein Breitband-Kommunikationsnetz, in welchem zwischen zwei Fernsprech-Vermittlungsanlagen eine Paketvermittlungsanlage als Transitvermittlungsanlage über Netzübergangseinrichtungen eingefügt ist, ist es zweckmäßig, das von den in eine Verbindung einbezogene Netzübergangseinrichtungen lediglich diejenige ein Steuersignal abgibt, welche von der Paketvermittlungsanlage her ein Anforderungssignal in Form eines Rufpaketes zugeführt erhält. Auf diese Weise ist auch für ein derartiges Breitband-Kommunikationsnetz lediglich eine Netzübergangseinrichtung in die Steuerung der Übertragung von Sprachsignal-Paketen einbezogen, so daß außer der Übertragung eines Steuersignals zur Festlegung des Paketfüllgrades keine zusätzlichen Kommunikationen zwischen den beiden Netzübergangseinrichtungen erforderlich sind.

Eine Schaltungsanordnung zur Durchführung des Verfahrens gemäß der vorliegenden Erfindung ergibt sich aus dem Patentanspruch 6. Der Vorteil dieser Schaltungsanordnung besteht in dem geringen zusätzlichen Schaltungsaufwand für die Festlegung des Paketfüllgrades für Sprachsignal-Pakete in Netzübergangseinrichtungen und in den mit Teilnehmereinrichtungen verbundenen Paketier/Depaketier-Einrichtungen.

Im folgenden wird nun die vorliegende Erfindung beispielsweise anhand von Zeichnungen näher erläutert.
FIG 1 zeigt in schematischer Form ein erstes Ausführungsbeispiel eines Breitband-Kommunikationsnetzes, bei dem die Erfindung angewandt ist,
FIG 2 zeigt ein zweites Ausführungsbeispiel eines Breitband-Kommunikationsnetzes,
FIG 3 zeigt ein Blockschaltbild einer Paketier/Depaketier-Einrichtung und
FIG 4 zeigt ein Blockschaltbild einer Netzübergangseinrichtung.

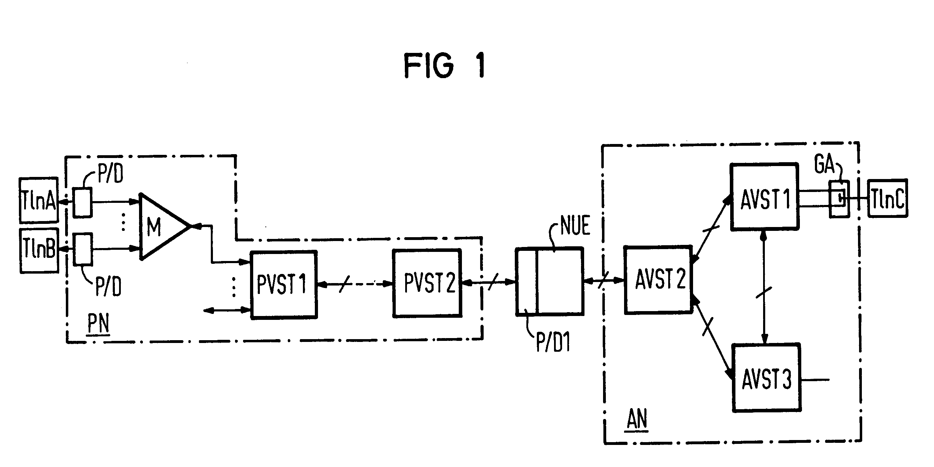

Das in FIG 1 dargestellte Breitband-Kommunikationsnetz möge beispielsweise aus einem Breitband-Paketvermittlungsnetz PN und einem analogen bzw. digitalen Fernsprech-Vermittlungsnetz AN für den Anschluß von analogen Fernsprech-Teilnehmereinrichtungen über eine 4-Draht/2-Draht-Gabelanordnung gebildet sein. Dabei sei das Paketvermittlungsnetz PN aus einer oder einer Mehrzahl von miteinander verbundenen Paketvermittlungsanlagen gebildet, von denen lediglich zwei mit PVST1 und PVST2 bezeichnete Vermittlungsanlagen dargestellt sind. Jede dieser Paketvermittlungsanlagen weist eine Vielzahl von Anschlußleitungen auf, die entweder als Teilnehmer-Anschlußleitungen oder als Amtsverbindungsleitungen benutzt sein können. Zur Vereinfachung der FIG 1 sind jedoch lediglich zwei derartige Teilnehmer-Anschlußleitungen sowie eine Amtsverbindungsleitung für die Paketvermittlungsanlage PVST1 und 2 Amtsverbindungsleitungen für die Paketvermittlungsanlage PVST2 dargestellt.

Innerhalb des Breitband-Paketvermittlungsnetzes erfolgt eine Übertragung von Signalen unterschiedlicher Dienste in Paketen fester Länge nach einem sogenannten ATM-Verfahren (asynchronous Transfer Mode). Das Informationsfeld jedes der Pakete sei beispielsweise mit 32 Oktetts festgelegt. Die Übertragungsgeschwindigkeit auf den Anschlußleitungen betrage dabei z. B. 140 Mbit/s. Für den Aufbau von Wählverbindungen mögen dabei, je nachdem, ob es sich bei den Anschlußleitungen um Teilnehmer-Anschlußleitungen oder um Amtsverbindungsleitungen handelt, Signalisierungsprozeduren benutzt sein, die für Teilnehmer-Anschlußleitungen dem gemäß der ISDN (Integrated Services Digital Network)-Empfehlungen festgelegten D-Kanal-Protokoll bzw. für Amtsverbindungsleitungen dem Zentralkanal-Zeichengabesystem Nr. 7 entsprechen. An der Schnittstelle des Paketvermittlungsnetzes zu den Teilnehmereinrichtungen hin, bei denen es sich um ISDN-Teilnehmereinrichtungen handeln möge, sind mit Teilnehmeranschlußleitungen über Multiplexer verbundene Paketier/Depaketier-Einrichtungen vorgesehen, um die von den Teilnehmereinrichtungen abgegebenen Signale in Pakete fester Länge einzufügen bzw. über das Paketvermittlungsnetz übertragene Pakete für eine Weiterleitung der Signale an die Teilnehmereinrichtungen aufzulösen. In FIG 1 sind ein Multiplexer M, zwei Paketier/Depaketier-Einrichtungen P/D sowie zwei damit verbundene Teilnehmereinrichtungen TlnA und TlnB dargestellt. Dabei sei hier angemerkt, daß die Paketier/Depaketier-Einrichtungen auch Bestandteil der Teilnehmereinrichtungen sein können.

Für einen Netzübergang zwischen dem Paketvermittlungsnetz PN und dem bereits erwähnten Fernsprech-Vermittlungsnetz AN ist eine Netzübergangseinrichtung NUE (Interworking Unit) vorgesehen, welche einerseits über ein Leitungsbündel mit einer Mehrzahl von Einzelleitungen mit dem Fernsprech-Vermittlungsnetz und andererseitis über wenigstens eine Amtsverbindungsleitung mit dem Paketvermittlungsnetz verbunden ist. Diese Netzübergangseinrichtung führt sämtliche für den Netzübergang erforderlichen Signal- und Prozedur-Umsetzungen durch. Dafür ist u. a. mit der jeweiligen Amtsverbindungsleitung eine Paketier/Depaketier-Einrichtung P/D1 verbunden. Bei dem Fernsprech-Vermittlungsnetz AN selbst möge es sich um ein herkömmliches Fernsprech-Vermittlungsnetz handeln, welches beispielsweise aus einer Mehrzahl von untereinander über Amtsverbindungsleitungen in Verbindung stehenden Fernsprech-Vermittlungsanlagen besteht. Diese Fernsprech-Vermittlungsanlagen, von denen in FIG 1 drei mit AVST1, AVST2 und AVST3 bezeichnete dargestellt sind, weisen jeweils neben Amtsverbindungsleitungen Teilnehmeranschlußleitungen auf, an welche analoge Teilnehmereinrichtungen über Gabelanordnungen GA anschließbar sind. In FIG 1 sind eine an die Fernsprech-Vermittlungsanlage AVST1 angeschlossene Gabelanordnungen sowie eine damit verbundene Teilnehmereinrichtung TlnC schematisch dargestellt. Darüber hinaus steht gemäß FIG 1 die Fernsprech-Vermittlungsanlage AVST2 mit der gerade genannten Netzübergangseinrichtung NUE in Verbindung.

Nachdem zuvor das in FIG 1 dargestellte Breitband-Kommunikationsnetz erläutert worden ist, wird nunmehr auf das Verfahren gemäß der vorliegenden Erfindung näher eingegangen. Dazu wird zunächst davon ausgegangen, daß für eine Sprachsignalübertragung eine Verbindung von der Teilnehmereinrichtung TlnA des Paketvermittlungsnetzes PN zu der Teilnehmereinrichtung TlnC des Fernsprech-Vermittlungsnetzes AN aufzubauen ist.

Für die Einleitung eines Verbindungsaufbaues wird in bekannter Weise von der Teilnehmereinrichtung TlnA eine Wahlinformation abgegeben, durch welche die für die Verbindung ausgewählte Teilnehmereinrichtung, hier die Teilnehmereinrichtung TlnC, bezeichnet ist. Diese Wahlinformation wird mit Hilfe der mit der Teilnehmereinrichtung TlnA verbundenen Paketier/Depaketier-Einrichtung P/D in ein sogenanntes Rufpaket eingefügt und anschließend der Paketvermittlungsanlage PVST1 zugeführt. In dieser wird dann in bekannter Weise anhand der Wahlinformation eine Leitweglenkung durchgeführt. Aufgrund dieser Leitweglenkung wird das Rufpaket an die Paketvermittlungsanlage PVST2 weitergeleitet, in welcher die ebenfalls durchgeführte Leitweglenkung dazu führt, daß das zuvor empfangene Rufpaket zu der Netzübergangseinrichtung NUE übertragen wird. Hier erfolgt mit Hilfe der mit der jeweiligen Übertragungsleitung verbundenen Paketier/Depaketier-Einrichtung (z. B. P/D1) eine Auflösung des Rufpaketes und nach einer Signal- und Prozedurumsetzung eine Weiterleitung der empfangenen Wahlinformationen an das Fernsprech-Vermittlungsnetz AN, hier an die Fernsprech-Vermittlungsanlage AVST2, von der aus schließlich die Verbindung zu der Teilnehmereinrichtung TLnC aufgebaut werden kann.

Auf den Empfang des zuvor erwähnten Rufpaketes hin erzeugt die Netzübergangseinrichtung NUE darüber hinaus ein Steuersignal, um die an der aufzubauenden Verbindung beteiligten Paketier/Depaketier-Einrichtungen, P/D1 und P/D, derart einzustellen, daß diese nach einem Verbindungsaufbau die über das Paketvermittlungsnetz PN zu übertragenden Sprachsignal-Pakete jeweils lediglich bis zu einem festgelegten, gegenüber der vollen Paketkapazität reduzierten Paketfüllgrad auffüllen bzw. entsprechend dem festgelegten Paketfüllgrad auflösen. Der Paketfüllgrad kann dabei beispielsweise auf die Hälfte der vollen Paketkapazität festgelegt sein.

Das zuvor genannte Steuersignal wird von der Netzübergangseinrichtung NUE der ihr zugehörigen Paketier/Depaketier-Einrichtung direkt für eine Einstellung zugeführt. Darüber hinaus wird dieses Steuersignal der mit der Teilnehmereinrichtung TlnA verbundenen Paketier/Depaketier-Einrichtung P/D über das Paketvermittlungsnetz PN zugeführt. Dabei kann dieses Steuersignal in ein Paket eingefügt sein, welches im Zuge des Verbindungsaufbaues entsprechend der vorgesehenen Signalisierungsprozedur in Richtung der Teilnehmereinrichtung TlnA zu übertragen ist. In der zuletzt genannten Paketier/Depaketier-Einrichtung wird dann auf den Empfang des Steuersignals hin eine solche Einstellung vorgenommen, daß nach dem Verbindungsaufbau die Pakete entsprechend dem festgelegten Paketfüllgrad mit Sprachsignalen aufgefüllt bzw. aufgelöst werden.

Bei einem gewünschten Verbindungsaufbau von der Teilnehmereinrichtung TlnC zu der Teilnehmereinrichtung TlnA hin laufen im Prinzip den gerade erläuterten Verfahrensschritten entsprechende Verfahrensschritte ab. In diesem Falle werden die von der Teilnehmereinrichtung TlnC abgegebenen Wahlinformationen über die Netzübergangseinrichtung NUE in ein Rufpaket umgesetzt und an die Paketvermittlungsstelle PVST2 weitergeleitet. Auch in dieser Verbindungsrichtung erzeugt die Netzübergangseinrichtung ein Steuersignal, um die an der Verbindung beteiligten Paketier/Depaketier-Einrichtungen hinsichtlich des festgelegten Paketfüllgrades für Sprachsignal-Pakete einzustellen.

Die mit Teilnehmereinrichtungen verbundenen Paketier/Depaketier-Einrichtungen P/D und die der Netzübergangseinrichtung NUE zugehörigen Paketier/Depaketier-Einrichtungen (P/D1) sind im übrigen in einer Grundeinstellung so eingestellt, daß sie Sprachsignal-Pakete vollständig mit Sprachsignalen auffüllen bzw. vollständig auflösen. Lediglich bei Auftreten eines Steuersignals wird der Paketfüllgrad für Sprachsignal-Pakete reduzuiert. Auf diese Weise ist es möglich, daß lediglich für Verbindungen mit einem Netzübergang der Paketfüllgrad für Sprachsignal-Pakete reduziert wird, während für Verbindungen, die ausschließlich innerhalb des Paketvermittlungsnetzes verlaufen, die volle Kapazität für Sprachsignal-Pakete ausgenutzt werden kann.

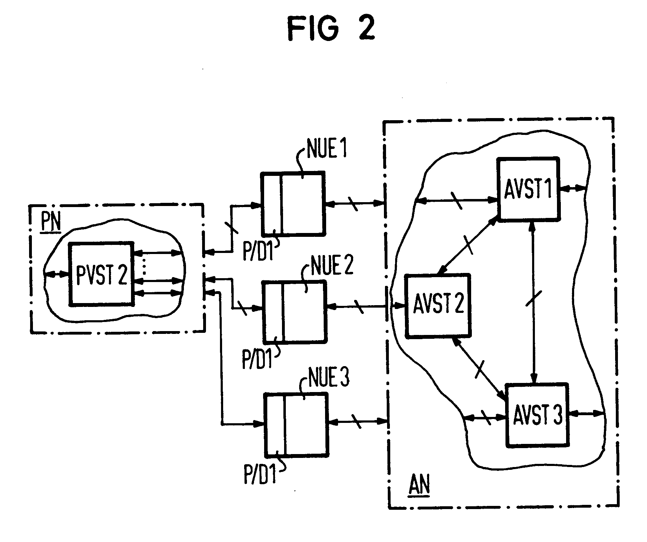

In FIG 2 ist ausschnittweise ein Breitband-Kommunikationsnetz dargestellt, das gegenüber dem in FIG 1 dargestellten derart modifiziert ist, daß eine Mehrzahl von Netzübergängen in verschiedenen Übertragungsrichtungen vorgesehen ist. Als Beispiel stehen drei Netzübergangseinrichtungen NUE1, NUE2 und NUE3 mit dem Paketvermittlungsnetz PN und dem Fernsprech-Vermittlungsnetz AN in Verbindung. Die drei Netzübergangseinrichtungen sind dabei über jeweils ein Leitungsbündel an drei unterschiedliche Fernsprech-Vermittlungsanlagen AVST1, AVST2 und AVST3 angeschlossen. In diesem Breitband-Kommunikationsnetz laufen den zuvor erläuterten Verfahrensschritten für die Festlegung des Paketfüllgrades von Sprachsignal-Paketen entsprechende Verfahrensschritte ab. Die Betriebsweisen der Netzübergangseinrichtungen Sind dabei so ausgelegt, daß von diesen jeweils in Abhängigkeit von der Übertragsrichtung individuell der Paketfüllgrad für Sprachsignal-Pakete durch Abgabe eines entsprechenden Steuersignals festgelegt wird. Die festgelegten Paketfüllgrade können dabei voneinander abweichen, um beispielsweise für bestimmte, den Netzübergangseinrichtungen zugeordnete Gruppen von Fernverbindungen individuell den günstigsten Paketfüllgrad von Sprachsignal-Paketen festzulegen. Auf diese Weise können die Paketfüllgrade an hinsichtlich ihrer Länge voneinander abweichende Fernverbindungen angepaßt werden.

Im übrigen können die in den FIG 1 und 2 dargestellten Breitband-Kommunikationsnetze auch in der Weise modifiziert sein, daß das Paketvermittlungsnetz PN als Transitnetz über Netzübergangseinrichtungen zwischen zwei Fernsprech-Vermittlungsnetze geschaltet ist. In diesem Falle ist die Betriebsweise der Netzübergangseinrichtungen derart ausgelegt, daß von den in eine Verbindung einbezogene Netzübergangseinrichtungen lediglich diejenige für eine Einstellung der Paketier/Depaketier-Einrichtungen ein Steuersignal abgibt, welche von dem Paketvermittlungsnetz PN her ein Rufpaket zugeführt erhält. Auf diese Weise ist sichergestellt, daß lediglich eine Netzübergangseinrichtung in die Steuerung der Übertragung von Sprachsignal-Paketen einbezogen ist, so daß außer der Abgabe eines Steuersignals für die Festlegung des Paketfüllgrades keine zusätzlichen Kommunikationen zwischen den Netzübergangseinrichtungen erforderlich sind.

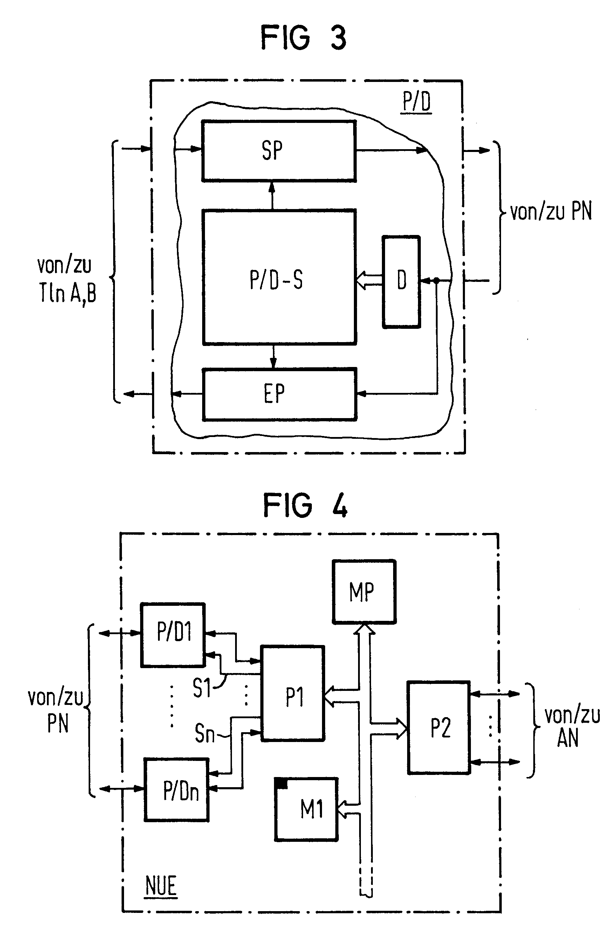

In FIG 3 ist in schematischer Form eine mit einer Teilnehmereinrichtung des Paketvermittlungsnetzes verbundene Paketier/Depaketier-Einrichtung P/D dargestellt. Da deren Aufbau sowie deren Wirkungsweise bereits bekannt sind, sind hier lediglich ein Sendepuffer SP für die Bildung von innerhalb des Paketvermittlungsnetzes PN zu übertragenden Paketen fester Länge, ein Empfangspuffer EP für die Auflösung von über das Paketvermittlungsnetz empfangenen Paketen sowie eine Paketier/Depaketier-Steuereinheit P/D-S angedeutet. Neben den genannten Einrichtungen ist ein Diskriminator D vorgesehen, der während eines Verbindungsaufbaus das Auftreten eines von einer Netzübergangseinrichtung her übertragenen Steuersignals überwacht. Wie bereits oben erwähnt, kann die Übertragung eines Steuersignals beispielsweise in einem Paket erfolgen, welches im Zuge des Verbindungsaufbaus in Richtung der für die aufzubauende Verbindung ausgewählten Teilnehmereinrichtung zu übertragen ist.

Bei Erkennen eines Steuersignals gibt der Diskriminator D gegebenenfalls nach einer Umcodierung ein Einstellsignal an die Paketier/Depaketier-Steuereinheit P/D-S ab. Mit Hilfe dieses Einstellsignals erfolgt von der Paketier/Depaketier-Steuereinheit her die Einstellung des Sendepuffers SP und des Empfangspuffers EP. Dafür werden in einer Paketier/Depaketier-Einrichtung üblicherweise vorhandene, der Steuerung der genannten Puffer dienende Zähleranordnungen derart voreingestellt, daß der Sendepuffer SP eine dem festgelegten Paketfüllgrad entsprechende Anzahl von Sprachsignalen in ein zu übertragendes Sprachsignal-Paket einfügt bzw. der Empfangspuffer EP eine dem festgelegten Paketfüllgrad entsprechende Auflösung von empfangenen Sprachsignal-Paketen vornimmt.

In einer Grundeinstellung sind die genannten Zähleranordnungen so voreingestellt, daß Sprachsignal-Pakete vollständig mit Sprachsignalen aufgefüllt bzw. Sprachsignal-Pakete vollständig aufgelöst werden. Lediglich auf das Auftreten eines Steuersignals hin wird die Voreinstellung modifiziert, um den Sendepuffer SP und den Empfangspuffer EP entsprechend dem empfangenen Steuersignal auf einen reduzierten Paketfüllgrad einzustellen.

In FIG 4 ist ein Blockschaltbild einer Netzübergangseinrichtung NUE dargestellt. Danach weist diese eine Mikroprozessoranordnung mit einem Mikroprozessor MP auf, an dessen Bussystem einerseits eine Speicheranordnung M1 und andererseits Schnittstelleneinrichtungen P1 und P2 angeschlossen sind. Die Speicheranordnung besteht dabei in bekannter Weise aus Schreib/Lese-Speichern und Programmspeichern. An die Schnittstelleneinrichtung P2 ist ein mit einem Fernsprech-Vermittlungsnetz verbundenes Leitungsbündel anschließbar. Demgegenüber steht die Schnittstelleneinrichtung P1 mit einer Mehrzahl von Paketier/Depaketier-Einrichtungen P/D1 bis P/Dn in Verbindung. Diese dienen für den Anschluß der betreffenden Netzübergangseinrichtung an ein Paketvermittlungsnetz. Darüber hinaus ist diesen Paketier/Depaketier-Einrichtungen von der Schnittstelleneinrichtung P1 her jeweils eine Steuerleitung zugeführt. Diese sind in FIG 1 mit S1 bis Sn bezeichnet.

Die Paketier/Depaketier-Einrichtungen P/D1 bis P/Dn weisen im übrigen im wesentlichen einen Aufbau auf, wie er zuvor anhand der FIG 3 beschrieben worden ist. Ein Unterschied besteht lediglich darin, daß kein Diskriminator vorgesehen ist, sondern die jeweilige Paketier/Depaketier-Steuereinheit mit einer der zuvor genannten Steuerleitungen S1 bis Sn in Verbindung steht, worüber die Einstellung des Paketfüllgrades erfolgt.

Von der in FIG 4 dargestellten Netzübergangseinrichtung werden in bekannter Weise sämtliche für einen Netzübergang erforderliche Signal- und Prozedur-Umsetzungen vorgenommen. Darüber hinaus überprüft der Mikroprozessor MP die ihm über die Schnittstelleneinrichtungen P1 und P2 zugeführten Nachrichtensignale hinsichtlich des Auftretens von einem Verbindungsaufbau einleitenden Signalen. Bei Auftreten derartiger Signale wird einerseits der zugehörigen, für die jeweilige Verbindung in Frage kommenden Paketier/Depaketier-Einrichtung ein zuvor erwähntes Steuersignal für deren Einstellung über die zugehörige Steuerleitung (S2,...Sn) zugeführt. Andererseits fügt der Mikroprozessor dieses Steuersignal in ein Signalisierung-Paket ein, welches, wie bereits zuvor erwähnt, zu der weiteren an der aufzubauenden Verbindung beteiligten Paketier/Depaketier-Einrichtung zu übertragen ist.

Vorstehend wurde das Verfahren gemäß der vorliegenden Erfindung lediglich am Beispiel zweier Breitband-Kommunikationsnetze beschrieben, welchen ein Breitband-Paketvermittlungsnetz und ein Fernsprech-Vermittlungsnetz für den Anschluß von analogen Teilnehmereinrichtungen zugehörig sind. Die Anwendung dieses Verfahrens ist jedoch nicht auf derartige Kommunikationsnetze beschränkt, sondern es ist allgemein in Breitband-Kommunikationsnetzen anwendbar, welchen zumindest ein Breitband-Paketvermittlungsnetz und ein Fernsprech-Vermittlungsnetz zugehörig sind und in welchen für eine Sprachsignalübertragung die Verzögerungszeiten zu reduzieren sind.

## Patentansprüche

1. Verfahren zum Übertragen von Sprachsignalen im Zuge von Wählverbindungen zwischen Teilnehmereinrichtungen eines Breitband-Kommunikationsnetzes, welchem zumindest ein für die Übertragung von Nachrichtensignalen unterschiedlicher Dienste in Paketen fester Länge ausgelegtes Paketvermittlungsnetz (PN) mit wenigstens einer Paketvermittlungsanlage (PVST2) und ein Fernsprech-Vermittlungsnetz (AN) mit wenigstens einer Fernsprech-Vermittlungsanlage (. AVST2) für den Anschluß analoger Fernsprech-Teilnehmereinrichtungen zugehörig sind, wobei für einen Netzübergang zwischen den unterschiedlichen Vermittlungsnetzen wenigstens eine Netzübergangseinrichtung (NUE) vorgesehen ist, welcher von einer Fernsprech-Vermittlungsanlage her ein Leitungsbündel mit einer Mehrzahl von Einzelleitungen zugeführt ist und welche über wenigstens eine Paketier/Depaketier-Einrichtung (. P/D1) mit einer Übertragungsleitung des Paketvermittlungsnetzes in Verbindung steht, und wobei Teilnehmereinrichtungen des Paketvermittlungsnetzes jeweils mit einer Paketier/Depaketier-Einrichtung (P/D) verbunden sind,
**dadurch gekennzeichnet**,
daß bei Auftreten eines eine Wählverbindung fordernden Anforderungssignals auf einer der Einzelleitungen des jeweiligen Leitungsbündels bzw. auf der jeweiligen Übertragungsleitung von der zugehörigen Netzübergangseinrichtung (NUE) her den an der aufzubauenden Verbindung beteiligten Paketier/Depaketier-Einrichtungen (. P/D1, P/D) ein Steuersignal zugeführt wird, durch welches diese Paketier/Depaketier-Einrichtungen im Zuge des Verbindungsaufbaus derart gesteuert werden, daß von diesen nach dem Aufbau der Verbindung bis zu deren Abbau die für die Übertragung von Sprachsignalen vorgesehenen Pakete fester Länge anstelle mit der vollen Paketkapazität lediglich entsprechend einem festgelegten reduzierten Paketfüllgrad gebildet bzw. aufgelöst werden.

2. Verfahren nach Anspruch 1, **dadurch gekennzeichnet**,
daß von der jeweiligen Netzübergangseinrichtung (NUE) das Steuersignal einerseits der jeweiligen, ihr zugehörigen Paketier/Depaketier-Einrichtung (. P/D1) direkt zugeführt wird und andererseits für eine Übertragung zu der weiteren, an der aufzubauenden Verbindung beteiligten Paketier/Depaketier-Einrichtung in ein im Zuge des Verbindungsaufbaues zu übertragendes Signalisierungspaket eingefügt wird.

3. Verfahren nach Anspruch 1 oder 2 **dadurch gekennzeichnet**,
daß von den Paketier/Depaketier-Einrichtungen (P/D) in einer Grundeinstellung für die Übertragung von Sprachsignalen die volle Kapazität der Sprachsignal-Pakete ausgenutzt wird, und daß lediglich auf das Auftreten eines Anforderungssignals in der jeweiligen Netzübergangseinrichtung von dieser ein Steuersignal den an der jeweils aufzubauenden Verbindung beteiligten Paketier/Depaketier-Einrichtungen für eine Reduzierung des Paketfüllgrades der Sprachsignal-Pakete zugeführt wird.

4. Verfahren nach Anspruch 3, **dadurch gekennzeichnet**,
daß bei Bestehen einer Mehrzahl von Netzübergängen in verschiedenen Übertragungsrichtungen zwischen einem Paketvermittlungsnetz (PN) und einem oder mehreren Fernsprech-Vermittlungsnetzen (AN) von den Netzübergangseinrichtungen jeweils in Abhängigkeit von der Übertragungsrichtung individuell durch Abgabe eines entsprechenden Steuersignals der Paketfüllgrad für Sprachsignal-Pakete festgelegt wird.

5. Verfahren nach einem der Ansprüche 1 bis 4 für ein Breitband-Kommunikationsnetz, in welchem zwischen zwei Fernsprech-Vermittlungsanlagen eine Paketvermittlungsanlage als Transitvermittlungsanlage über Netzübergangseinrichtungen eingefügt ist, **dadurch gekennzeichnet**,
daß von den in eine Verbindung einbezogene Netzübergangseinrichtungen lediglich diejenige ein Steuersignal abgibt, welche von der Paketvermittlungsanlage her ein Anforderungssignal in Form eines Rufpaketes zugeführt erhält.

6. Schaltungsanordnung zum Übertragen von Sprachsignalen im Zuge von Wählverbindungen zwischen Teilnehmereinrichtungen eines Breitband-Kommunikationsnetzes, welchem zumindest ein für die Übertragung von Nachrichtensignalen unterschiedlicher Dienste in Paketen fester Länge ausgelegtes Paketvermittlungsnetz (PN) mit wenigstens einer Paketvermittlungsanlage (PVST2) und ein Fernsprech-Vermittlungsnetz (AN) mit wenigstens einer Fernsprech-Vermittlungsanlage (. AVST2) für den Anschluß analoger Fernsprech-Teilnehmereinrichtungen zugehörig sind, wobei für einen Netzübergang zwischen den unterschiedlichen Vermittlungsnetzen wenigstens eine Netzübergangseinrichtung (NUE) vorgesehen ist, welcher von einer Fernsprech-Vermittlungsanlage her ein Leitungsbündel mit einer Mehrzahl von Einzelleitungen zugeführt ist und welche über wenigstens eine Paketier/Depaketier-Einrichtung (z. B. P/D1) mit einer Übertragungsleitung des Paketvermittlungsnetzes in Verbindung steht, und wobei Teilnehmereinrichtungen des Paketvermittlungsnetzes jeweils mit einer Paketier/Depaketier-Einrichtung (P/D) verbunden sind, zur Durchführung des Verfahrens nach einem der Ansprüche 1 bis 5,
**dadurch gekennzeichnet**,
daß in der jeweiligen Netzübertragungseinrichtung (NUE) eine Überwachungseinrichtung (MP, P1, P2) vorgesehen ist, welche der zugehörigen Netzübergangseinrichtung über das Paketvermittlungsnetz bzw. Fernsprech-Vermittlungsnetz zugeführte Signale hinsichtlich des Auftretens von dem Aufbau von Verbindungen dienenden Anforderungssignalen und Steuersignalen überwacht,
daß die Überwachungseinrichtung bei Auftreten eines Anforderungssignals einerseits der der Netzübergangseinrichtung zugehörigen, für die aufzubauende Verbindung in Frage kommenden Paketier/Depaketier-Einrichtung für deren Einstellung ein Steuersignal über eine gesonderte Steuerleitung zuführt und andererseits ein Steuersignal in ein im Zuge des Verbindungsaufbaues zu dem Paketvermittlungsnetz hin zu übertragendes Signalisierungspaket einfügt,
daß die Überwachungseinrichtung bei Auftreten eines Steuersignals lediglich dieses über die genannte Steuerleitung abgibt,
daß in den mit den Teilnehmereinrichtungen verbundenen Paketier/Depaketier-Einrichtungen (P/D) jeweils ein Diskriminator (D) für das Erkennen von in Signalisierungspaketen übertragenen Steuersignalen vorgesehen ist, welcher auf das Erkennen eines Steuersignals hin ein entsprechendes Einstellsignal für eine Einstellung der jeweiligen Paketier/Depaketier-Einrichtung bereitstellt,
und daß die Einstellung der jeweiligen Paketier/Depaketiereinrichtung (P/D) derart erfolgt, daß nach dem Aufbau der Verbindung bis zu deren Abbau die für die Übertragung von Sprachsignalen vorgesehenen Pakete fester Länge anstelle mit der vollen Paketkapazität lediglich entsprechend einem festgelegten reduzierten Paketfüllgrad gebildet bzw. aufgelöst sind.

## Claims

1. A method for transmitting voice signals in the circuit of dial-up connections between subscriber installations of a broadband communication network, to which at least one packet switching network (PN), designed for the transmission of information signals from different services in fixed-length packets, with at least one packet switching system (PVST2) and a telephone switching network (AN) with at least one telephone switching system (AVST2) for connecting analogue telephone subscriber installations belong, at least one network interworking facility (NUE) being provided for network interworking between the different switching networks, which network interworking facility is supplied with a line group with a plurality of individual lines from a telephone switching system and which is connected via at least one packet assembly/disassembly facility (P/D1) to a transmission line of the packet switching network, and subscriber installations of the packet switching network in each case being connected to one packet assembly/disassembly facility (P/D), characterised in that when a request signal demanding a dial-up connection occurs on one of the individual lines of the respective line group or on the respective transmission line, a control signal is supplied from the associated network interworking facility (NUE) to the packet assembly/disassembly facilities (P/D1, P/D) involved in the connection to be set up, by means of which control signal these packet assembly/disassembly facilities are controlled during the setting-up of the connection, in such a manner that, after the setting-up of the connection until it is cleared down, they only form or disassemble the fixed-length packets provided for the transmission of voice signals in accordance with a fixed reduced degree of packet filling instead of with the full packet capacity.

2. Method according to Claim 1, characterised in that the control signal is supplied by the respective network interworking facility (NUE), on the one hand directly to the respective packet assembly/disassembly facility (P/D1) associated with it and, on the other hand, is inserted into a signalling packet to be transmitted during the setting-up of the connection for a transmission to the further packet assembly/disassembly facility involved in the connection to be set up.

3. Method according to Claim 1 or 2, characterised in that the packet assembly/disassembly facilities (P/D) utilise the full capacity of the voice signal packets for the transmission of voice signals in a basic setting, and that a control signal is only supplied by the respective network interworking facility to the packet assembly/disassembly facilities involved in the connection to be set up in each case for a reduction of the degree of packet filling of the voice signal packets following the occurrence of a request signal in this network interworking facility.

4. Method according to Claim 3, characterised in that when a plurality of network gateways exist in various directions of transmission between a packet switching network (PN) and one or more telephone switching networks (AN), the degree of packet filling for voice signal packets is in each case determined by the network interworking facilities individually by outputting a corresponding control signal in dependence on the direction of transmission.

5. Method according to one of Claims 1 to 4 for a broadband communication network in which a packet switching system is inserted between two telephone switching systems as transit switching system via network inter-working facilities, characterised in that of the network interworking facilities included in a connection, only that which is supplied with a request signal in the form of a call packet from the packet switching system outputs a control signal.

6. Circuit arrangement for transmitting voice signals in the circuit of dial-up connections between subscriber installations of a broadband communication network, to which at least one packet switching network (PN), designed for the transmission of information signals from different services in fixed-length packets, with at least one packet switching system (PVST2) and a telephone switching network (AN) with at least one telephone switching system (AVST2) for connecting analogue telephone subscriber installations belong, at least one network interworking facility (NUE) being provided for network interworking between the different switching networks, which network interworking facility is supplied with a line group with a plurality of individual lines from a telephone switching system and which is connected via at least one packet assembly/disassembly facility (e.g. P/D1) to a transmission line of the packet switching network, and subscriber installations of the packet switching network in each case being connected to one packet assembly/disassembly facility (P/D) for carrying out the method according to Claims 1 to 5, characterised in that in the respective network interworking facility (NUE), a monitoring facility (MP, P1, P2) is provided which monitors signals supplied to the associated network interworking facility via the packet switching network or telephone switching network with respect to the occurrence of request signals and control signals used for the setting-up of connections, that when a request signal occurs, the monitoring facility, on the one hand, supplies a control signal via a separate control line to the packet assembly/disassembly facility in question for the connection to be set up and associated with the network interworking facility and, on the other hand, inserts a control signal into a signalling packet to be transmitted to the packet switching network during the setting-up of the connection, that when a control signal occurs, the monitoring device only outputs this signal via the given control line, that in the packet assembly/disassembly facilities (P/D) connected to the subscriber installations, a discriminator (D) for detecting control signals transmitted in signalling packets is in each case provided which, following the detection of a control signal, provides a corresponding setting signal for setting the respective packet assembly/disassembly facility, and that the respective packet assembly/disassembly facility (P/D) is set in such a way that, after the connection has been set up and until it is cleared down, the fixed-length packets provided for the transmission of voice signals are only formed or disassembled in accordance with a predetermined reduced degree of packet filling instead of with the full packet capacity.

## Revendications

1. Procédé de transmission de signaux vocaux à la suite de connexions commutées entre des dispositifs d'abonnés d'un réseau de communication à large bande, auquel sont associés au moins un réseau de commutation par paquets (PN), qui est conçu pour la transmission de signaux de communication de services différents en paquets de longueur fixe, et qui comporte au moins une installation de commutation par paquets (PVST2), et un réseau de commutation téléphonique (AN) comportant au moins une installation de commutation téléphonique (AVST2) pour le raccordement de dispositifs analogiques d'abonnés téléphoniques, du type dans lequel il est prévu, pour une passerelle inter-réseaux entre les différents réseaux de commutation, au moins un dispositif passerelle (NUE), auquel est amené, à partir d'une installation de commutation téléphonique, un faisceau de lignes comportant une multiplicité de lignes unifilaires, le dispositif passerelle étant en liaison, par l'intermédiaire d'au moins un dispositif d'assemblage en paquet/de désassemblage de paquet (P/D1), avec une ligne de transmission du réseau de commutation par paquets, des dispositifs d'abonnés du réseau de commutation par paquets étant reliés respectivement à un dispositif d'assemblage en paquet/de désassemblage de paquet (P/D),
caractérisé en ce que,
à l'apparition d'un signal d'appel demandant une connexion commutée, on envoie, sur l'une des lignes unifilaires du faisceau de lignes concerné ou sur la ligne de transmission concerné du dispositif passerelle (NUE) associé, aux dispositifs d'assemblage en paquet/de désassemblage de paquet (P/D1, P/D) participant à la liaison à élaborer, un signal de commande par l'intermédiaire duquel ces dispositifs d'assemblage en paquet/de désassemblage de paquet sont commandés, à la suite de l'établissement de la connexion, de telle façon qu'après l'établissement de la connexion jusqu'à sa suppression, les paquets prévus pour la transmission des signaux vocaux et de longueur fixe sont assemblés ou désassemblés par ces dispositifs d'assemblage en paquet/de désassemblage de paquet, non pas avec la capacité totale en paquet, mais en fonction d'un degré de remplissage en paquet réduit et déterminé.

2. Procédé suivant la revendication 1, caractérisé en ce que,
à partir du dispositif passerelle (NUE) concerné, le signal de commande est, d'une part, envoyé directement au dispositif d'assemblage en paquet/de désassemblage de paquet (P/D1) qui est concerné et qui lui est associé et, d'autre part, est inséré, pour une transmission vers l'autre dispositif d'assemblage en paquet/de désassemblage de paquet participant à l'établissement de la connexion, dans un paquet de signalisation à transmettre à la suite de l'établissement de la connexion.

3. Procédé suivant la revendication 1 ou 2, caractérisé en ce que,
la totalité de la capacité en paquets de signaux vocaux est utilisée par les dispositifs d'assemblage en paquet/de désassemblage de paquet (P/D), dans un réglage de base, pour la transmission des signaux vocaux, et que, uniquement à l'apparition d'un signal d'appel dans le dispositif passerelle concerné, un signal de commande est envoyé par le dit signal d'appel au dispositif d'assemblage en paquet/de désassemblage de paquet participant à l'établissement de la connexion, en vue d'une réduction du degré de remplissage en paquets de signaux vocaux

4. Procédé suivant la revendication 3, caractérisé en ce que,
dans le cas de la présence d'une multiplicité de passerelles inter-réseaux dans différentes directions de transmission, entre un réseau de commutation par paquets (PN) et un ou plusieurs réseaux de commutations téléphoniques (AN), le degré de remplissage en paquet pour des paquets de signaux vocaux est déterminé par les dispositifs passerelles en fonction de la direction de transmission, individuellement par la délivrance d'un signal de commande correspondant.

5. Procédé suivant l'une des revendications 1 à 4, pour un réseau de communication à large bande, dans lequel est insérée, entre deux installations de commutations téléphoniques, une installation de commutation par paquets en tant qu'installation de commutation de transit, par l'intermédiaire de dispositifs passerelles,
caractérisé en ce que, parmi les dispositifs passerelles introduits dans une connexion, un signal de commande est fourni uniquement par celui qui reçoit de l'installation de commutation par paquets, un signal d'appel sous la forme d'un signal de sonnerie.

6. Montage pour la transmission de signaux vocaux à la suite de connexions commutées entre des dispositifs d'abonnés d'un réseau de communication à large bande, auquel sont associés au moins un réseau de commutation par paquets (PN) qui est conçu pour la transmission de signaux de communication de services différents en paquets de longueur fixe et qui comporte au moins une installation de commutation par paquets (PVST2), et un réseau de commutations téléphoniques (AN) comportant au moins une installation de commutation téléphonique (AVST2) pour le raccordement de dispositifs analogiques d'abonnés téléphoniques, du type dans lequel il est prévu, pour une passerelle inter-réseaux entre les différents réseaux de commutation, au moins un dispositif passerelle (NUE), auquel est amené, à partir d'une installation de commutation téléphonique, un faisceau de lignes comportant une multiplicité de lignes unifilaires, le dispositif passerelle étant en liaison, par l'intermédiaire d'au moins un dispositif d'assemblage en paquet/de désassemblage de paquet (P/D1), avec une ligne de transmission du réseau de commutation par paquets, et du type dans lequel des dispositifs d'abonnés du réseau de commutation par paquets sont reliés respectivement à un dispositif d'assemblage en paquet/de désassemblage de paquet (P/D), circuit destiné à la mise en oeuvre du procédé suivant l'une des revendications 1 à 5,
caractérisé en ce
qu'il est prévu, dans le dispositif passerelle respectif (NUE), un dispositif de surveillance (MP, P1, P2), qui surveille des signaux qui sont envoyés au dispositif passerelle associé, par l'intermédiaire du réseau de commutation par paquets ou du réseau de commutation téléphonique, et qui concernent l'apparition de signaux d'appel et de signaux de commande servant à l'établissement de connexions,
que le dispositif de surveillance, à l'apparition d'un signal d'appel, d'une part, envoie au dispositif d'assemblage en paquet/de désassemblage de paquet associé au dispositif passerelle et à considérer pour l'établissement de la connexion, un signal de commande, pour son réglage, par l'intermédiaire d'une ligne particulière de commande, et, d'autre part, insère un signal de commande dans un paquet de signalisation à transmettre, à la suite de l'établissement de la connexion, au réseau de commutation par paquet,
que le dispositif de surveillance fournit, à l'apparition d'un signal de commande, par l'intermédiaire de ladite ligne de commande, uniquement ce signal de commande,
qu'il est prévu, dans les dispositifs d'assemblage en paquet/de désassemblage de paquet (P/D) reliés aux dispositifs d'abonnés, un discriminateur (D) qui sert à l'identification de signaux de commande transmis dans des paquets de signalisation, et qui, à l'identification d'un signal de commande, fournit un signal de réglage correspondant, pour un réglage du dispositif concerné d'assemblage en paquet/de désassemblage de paquet,
et que le réglage du dispositif concerné d'assemblage en paquet/de désassemblage de paquet (P/D) s'effectue de telle façon qu'après l'établissement de la connexion jusqu'à sa suppression, les paquets prévus pour la transmission des signaux vocaux et de longueur fixe, sont assemblés ou désassemblés, en fonction d'un degré de remplissage en paquet réduit et déterminé, et non pas de la totalité de la capacité en paquet.
